# FASCICULE DE BREVET EUROPEEN

(11) **EP 3 084 119 B1**
(45) Date de publication et mention de la délivrance du brevet: **24.04.2019**
(21) Numéro de dépôt: 14830834.9
(22) Date de dépôt: 19.12.2014
(51) Int. Cl.: E21B 37/06, C09K 8/528, E21B 47/10, C09K 8/54

(54) **MÉTHODE POUR AJUSTER LE TAUX D'INHIBITEURS DANS UN PUITS DE PÉTROLE OU DE GAZ**
VERFAHREN ZUR PEGELEINSTELLUNG VON INHIBITOREN IN ÖL- ODER GASBOHRUNGEN
METHOD FOR ADJUSTING THE LEVEL OF INHIBITORS IN AN OIL OR GAS WELL

(30) Priorité: 20.12.2013 FR 1363287
(43) Date de publication de la demande: 26.10.2016
(73) Titulaire: Total SA, 92400 Courbevoie (FR); Université Claude Bernard Lyon 1, 69100 Villeurbanne (FR); Centre National de la Recherche Scientifique - CNRS, 75016 Paris (FR)
(72) Inventeur: HURTEVENT, Christian, F-46310 Saint Chamarand (FR); BARAKA-LOKMANE, Salima, F-64000 Pau (FR); ORDONEZ-VARELA, John-Richard, F-64140 Lons (FR); TILLEMENT, Olivier, F-69270 Fontaines Saint-Martin (FR); BRICHART, Thomas, F-56000 Vannes (FR); MARTINI, Matteo, F-69006 Lyon (FR)
(74) Mandataire: Cabinet Plasseraud
(86) Numéro de dépôt international: PCT/FR2014/053441
(87) Numéro de publication internationale: WO 2015/092310

(56) Documents cités:
- WO-A2-2010/140033
- US-A1- 2009 087 912
- US-A1- 2012 032 093
- US-A1- 2013 236 983
- NEIL POYNTON ET AL: "Development of a New Tagged Polymeric Scale Inhibitor with Accurate Low-level Residual Inhibitor Detection, for Squeeze Applications", SPE INTERNATIONAL CONFERENCE ON OILFIELD SCALE, 30 mai 2012 (2012-05-30), XP055135347, DOI: 10.2118/155187-MS

## Description

### DOMAINE TECHNIQUE

La présente invention a pour objet une méthode pour ajuster à une valeur prédéterminée le taux d'un inhibiteur de dépôts minéraux ou de corrosion injecté dans un puits de gaz ou de pétrole. Elle a également pour objet l'utilisation de la méthode de fluorescence en temps résolu pour détecter et quantifier un inhibiteur de dépôts minéraux ou de corrosion dans un fluide issu d'un puits de production de pétrole ou de gaz.

### ARRIERE-PLAN DE L'INVENTION

Lors de l'exploitation de champs pétroliers ou gaziers, la récupération de pétrole peut être améliorée en injectant de l'eau dans le gisement, via un puits d'injection, de manière à pousser le pétrole du gisement hors du sous-sol, par au moins un autre puits appelé puits de production. L'interaction de l'eau injectée avec le réservoir contenant le gaz, le pétrole et des eaux souterraines peut résulter en la formation d'espèces chimiques susceptibles d'entraîner des défauts de fonctionnement des installations. Plus particulièrement, des dépôts de sulfate de baryum, de carbonate de calcium ou de sulfures de zinc et de plomb, par exemple, sont notamment susceptibles de se former dans des conditions d'exploitation à haute pression et haute température ou lors de la mise en contact de la saumure injectée pour extraire le pétrole ou le gaz avec le sulfure d'hydrogène ou les ions contenus dans le réservoir. La production d'eau de réservoir ou d'aquifère simultanément avec le pétrole ou le gaz peut entrainer les mêmes phénomènes. Ces dépôts minéraux sont susceptibles d'obstruer les canaux d'écoulement dans la formation, de polluer les canalisations et les équipements de surface et de bloquer les systèmes de pompage. Plus généralement, des dépôts minéraux ou des phénomènes de corrosion peuvent apparaître dans différentes conditions d'exploitation.

Pour empêcher ou ralentir ces phénomènes, des additifs sont injectés dans la formation souterraine ou dans les puits de gaz ou de pétrole. Un exemple de tels additifs est constitué des inhibiteurs de dépôts minéraux et des inhibiteurs de corrosion. L'injection d'un fluide contenant un inhibiteur capable de prévenir la formation des cristaux problématiques, d'empêcher leur croissance ou de les disperser permet ainsi de contrer les inconvénients précités et d'éviter ou de retarder le démontage des installations en vue de leur nettoyage.

Le dosage de ces inhibiteurs constitue toutefois un aspect essentiel de la production d'hydrocarbures, afin de s'assurer qu'ils sont présents en quantité suffisante pour remplir leur fonction et, en cas de besoin, d'injecter en temps utile une quantité supplémentaire d'inhibiteur, ajustée pour tenir compte des contraintes économiques du procédé et de son impact environnemental.

Les méthodes utilisées actuellement pour doser ces inhibiteurs sont souvent peu précises et/ou longues et nécessitent des appareillages souvent insuffisamment adaptés aux conditions d'exploitation. Un des exemples de ces méthodes est le dosage d'inhibiteurs de corrosion par le méthyl orange. Bien que cette technique présente une grande souplesse, elle manque cruellement de fiabilité et présente une incertitude relative très importante sur les résultats.

Pour le dosage de molécules inhibitrices de dépôts minéraux, une analyse chimique précise est nécessaire sur un certain nombre d'éléments spécifiques d'une des molécules utilisées (mesure du taux d'azote ou de phosphore par exemple, méthode dite Hyamine pour les polymères). Ces mesures peuvent être réalisées soit par spectrométrie de masse et/ou par séparation et concentration à l'aide de dispositifs analytiques tels que la chromatographie en phase liquide à haute performance (HPLC). Ces techniques sont à la fois complexes et difficiles à mettre en place.

La mise au point d'une méthode de détection fiable et rapide se heurte en outre au fait que ces inhibiteurs sont généralement si efficaces qu'ils ne sont présents dans le fluide injecté qu'à hauteur de quelques ppm, et par la présence dans le fluide constitué des eaux d'exploitation d'une diversité de composés tels que des sels et des résidus organiques. Du fait de la présence de ces composés, le fluide complexe produit présente notamment une fluorescence intrinsèque qui empêche la détection des inhibiteurs, éventuellement marqués par une sonde fluorescente, à l'aide des techniques traditionnelles de fluorescence. Enfin, les sites de production sont généralement situés dans des lieux reculés, éloignés des laboratoires d'analyse locaux, ce qui constitue une contrainte supplémentaire.

Il serait donc souhaitable de pouvoir doser ces inhibiteurs directement sur site, dans les eaux de production, à l'aide d'une méthode simple, fiable et précise, utilisable sur une diversité d'inhibiteurs de dépôts minéraux et de corrosion et pouvant être mise en oeuvre à l'aide d'appareils peu encombrants pour pouvoir être déplacés aisément.

Les inventeurs ont démontré que ces besoins pouvaient être satisfaits en associant ces inhibiteurs à un ion lanthanide et en utilisant la méthode de fluorescence en temps résolu. Cette méthode permet en effet de s'affranchir de la fluorescence naturelle des eaux d'exploitation, qui présente des temps d'émission très courts, et de ne récolter que la lumière émise après un délai de quelques microsecondes à une milliseconde, de préférence de 100 microsecondes à une milliseconde, résultant de la fluorescence des inhibiteurs ainsi marqués. Le dosage des inhibiteurs peut alors être effectué par quantification du signal de phosphorescence émis, avec une précision inférieure à 10 ppm, voire inférieure à 1 ppm.

Cette méthode a en outre pour avantage d'identifier spécifiquement le type d'inhibiteur (de dépôts minéraux ou de corrosion), même lorsqu'il est présent dans un fluide complexe formé par les eaux de production dans le milieu pétrole, en fonction de sa signature optique, en exploitant simultanément les spectres d'excitation et d'émission et les durées de vie des signaux émis.

### RESUME DE L'INVENTION

La présente invention a pour objet une méthode pour ajuster à une valeur prédéterminée le taux d'un inhibiteur de dépôts minéraux ou de corrosion injecté dans un puits de gaz ou de pétrole, telle que définie dans la revendication 1.

Elle a également pour objet l'utilisation de la méthode de fluorescence en temps résolu pour détecter et quantifier un inhibiteur de dépôts minéraux ou de corrosion dans un fluide issu d'un puits de production de pétrole ou de gaz, telle que définie dans la revendication 4.

### DESCRIPTION DETAILLEE DE MODES DE REALISATION

La méthode selon l'invention comprend essentiellement la détection et la quantification, par fluorescence en temps résolu, d'un inhibiteur de dépôts minéraux ou de corrosion, marqué par un lanthanide, qui est présent dans le fluide extrait d'un puits de production de pétrole ou de gaz.

Par "inhibiteur de dépôts minéraux", on entend un composé capable d'empêcher ou de ralentir la formation (c'est-à-dire la nucléation et/ou la croissance) de cristaux de sels minéraux choisis notamment parmi : le carbonate de calcium, le sulfate de calcium, le sulfate de baryum, le sulfate de strontium, les sulfures de zinc, de plomb et de fer et leurs mélanges. Les inhibiteurs de dépôts minéraux utilisables selon l'invention sont choisis parmi :
- les polyphosphates, tels que le tripolyphosphate de sodium (STPP), l'hexamétaphosphate de sodium (SHMP),
- les organophosphonates, tels que l'acide amino tri(méthylène phosphonique) ou AMP, l'acide 1-hydroxyéthylidène-1,1-diphosphonique ou HEDP, l'acide éthylènediamine tétra(méthylène phosphonique) ou EDTMP, l'acide hexaméthylènediamine tétra(méthylène phosphonique) ou HMTMP, l'acide diéthylènetriamine penta(méthylène phosphonique) ou DETMP, l'acide hydroxyéthylamino-di(méthylènephosphonique) (HEMPA),
- les polyacides carboxyliques tels que l'acide 2-phosphonobutane 1,2,4-tricarboxylique ou PBTC, le poly(acide acrylique) ou PAA, le poly(acide méthacrylique) ou PMAA, le poly(acide maléique) ou PMA,
- les polymères à fonction acide sulfonique, tels que les copolymères d'acide styrène sulfonique et d'acide (poly)carboxylique, en particulier les copolymères d'acide styrène sulfonique et d'acide maléique, les copolymères d'acide styrène sulfonique et de (poly)amido-amine, les homo- et copolymères de vinylsulfonate, en particulier les copolymères de vinylsulfonate, de styrène et d'anhydride maléique, les alkyldiphényléther sulfonates et les copolymères d'acide acrylamidométhylpropane sulfonique (AMPS), d'acide maléique et d'acide acrylique,
- l'acide polyphosphinocarboxylique (PPCA) éventuellement sulfonaté,
- la polyéthylèneimine (PEI),
- les polymères siliconés, en particulier les polydiméthylsiloxanes, fonctionnalisés par des groupements amines, et
- les copolymères à base d'ammonium quaternaire, tels que les copolymères d'acrylamide, d'ammonium quaternaire et éventuellement d'acrylate et les copolymères d'acrylamide, de sel de diallyldiméthylammonium et éventuellement d'acrylate.

Par "inhibiteur de corrosion", on entend un composé capable de réduire la vitesse de corrosion d'un matériau, typiquement un métal ou un alliage métallique, due à l'action sur ce matériau d'un oxydant tel que le dioxygène ou l'ion H⁺. Les inhibiteurs de corrosion utilisables selon l'invention sont choisis parmi la cyclohexylamine, l'hexylamine, la morpholine , l'octadécylamine, ainsi que le diéthylaminoéthanol, et les bétaïnes.

Des lanthanides utilisés comme marqueurs selon l'invention peuvent être choisis parmi les éléments de numéro atomique 57 (lanthane) à 71 (lutécium), tels que Pr, Nd, Sm, Eu, Tb, Dy, Ho, Er, Tm et Yb, ainsi que leurs mélanges et/ou alliages. Les lanthanides préférés pour une utilisation selon l'invention sont l'europium (Eu) et le terbium (Tb).

Selon une première forme d'exécution de l'invention, plus particulièrement adaptée aux inhibiteurs de type polymérique, le marquage de l'inhibiteur par le lanthanide peut être effectué dans un fluide injecté dans le puits. On enregistre la signature optique de l'inhibiteur marqué, correspondant à ses caractéristiques d'émission, d'excitation et de durée de vie, qui est ensuite comparée avec les données recueillies à partir du fluide extrait. Il est ainsi possible d'identifier et de quantifier l'inhibiteur marqué au sein du fluide extrait du puits de production.

Dans cette forme d'exécution de l'invention, le marquage de l'inhibiteur à l'aide du lanthanide peut être effectué de différentes manières.

Dans une première variante adaptée aux inhibiteurs de type polymérique, une molécule complexant le lanthanide est greffée sur le squelette de l'inhibiteur. Par "molécule complexante", on entend toute molécule capable de former avec le lanthanide un complexe comprenant au moins deux liaisons de coordination. On choisit de préférence une molécule complexante ayant une coordinance d'au moins 6, par exemple d'au moins 8, et une constante de dissociation du complexe avec le lanthanide supérieure à 10 et de préférence supérieure à 15. Ces molécules complexantes sont avantageusement des molécules chélatantes polydentates choisies notamment parmi les polyamines et les polyacides carboxyliques, tels que l'acide diéthylène triamine pentaacétique (DTPA), l'acide éthylène diamine tétraacétique (EDTA) et le DOTA-GA (macrocycle azoté portant 3 fonctions carboxyle et une fonction anhydride glutarique), le DOTAM (macrocycle azoté portant 4 fonctions amines) et le DO3AM (macrocycle azoté portant 3 fonctions amines et une fonction aminoéthyl éthanamide. On veillera, dans cette variante de l'invention, à ce que la taille de la molécule chélatante et le nombre de molécules chélatantes par molécule d'inhibiteur ne perturbent pas le fonctionnement de ce dernier.

Dans une seconde variante, adaptée aux inhibiteurs de type chélates présentant une constante de complexation avec les ions lanthanides supérieure à 10, le marquage de l'inhibiteur est réalisé par complexation du lanthanide à l'aide de l'inhibiteur. Dans cette variante, les molécules d'inhibiteur marquées peuvent représenter de 1/100 à 1/1000 des molécules totales d'inhibiteur injectées dans le puits.

Selon une seconde forme d'exécution de l'invention, l'inhibiteur peut être marqué dans le fluide extrait du puits de production, après l'étape d'extraction. Dans cette forme d'exécution, des ions lanthanides sont introduits dans le fluide extrait et forment des complexes avec les inhibiteurs présents. La comparaison des caractéristiques d'émission, d'excitation et/ou de durée de vie des ions lanthanides libres et des ions lanthanides complexés permet d'identifier et de quantifier les inhibiteurs présents dans le fluide extrait.

Selon l'invention, l'inhibiteur est détecté, et son taux quantifié, en utilisant une méthode de fluorescence en temps résolu qui est notamment décrite dans l'article "Ultrasensitive bioanalytical assays using time resolved fluorescence detection", Pharmacol. Ther. Vol. 66(2), pp. 207-35, 1995. Celle-ci repose sur l'application d'un délai, dit délai d'intégration, entre l'excitation de l'échantillon à analyser et la mesure du signal émis, de manière à s'affranchir des fluorescences parasites à durée de vie courte. Cette méthode peut être mise en oeuvre à température ambiante, notamment à l'aide d'un appareil de type Cary Eclipse de la société Agilent, comme indiqué dans les Exemples. La longueur d'onde d'excitation peut être comprise entre 200 et 600 nm et la longueur d'onde d'émission peut être comprise entre 300 et 800 nm. Le délai d'intégration peut être compris entre 0,001 et 10 ms, de préférence entre 0,01 et 5 ms, plus préférentiellement entre 0,1 et 3 ms. Dans certains cas, plus ce délai est long, meilleur est le rapport signal / bruit, ce qui améliore la fiabilité de la mesure. La durée de récolte des photons peut aller de 5 à 10 ms, par exemple. Cette méthode peut être appliquée de différentes manières. Il est ainsi possible de comparer l'intensité d'émission de l'échantillon testé avec celles obtenues à différentes concentrations d'inhibiteur, pour en déduire la concentration de l'inhibiteur dans l'échantillon. En variante, il est possible de détecter plusieurs inhibiteurs dans l'échantillon testé en mesurant la vitesse de décroissance du signal émis par l'échantillon, ou demi-vie, et en comparant les valeurs obtenues avec celles connues pour les différents inhibiteurs.

### FIGURES

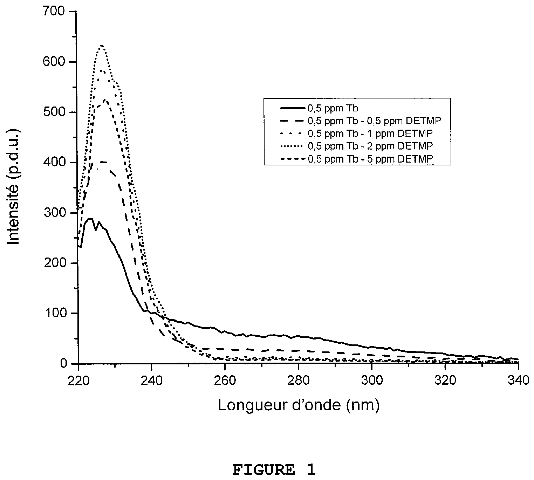

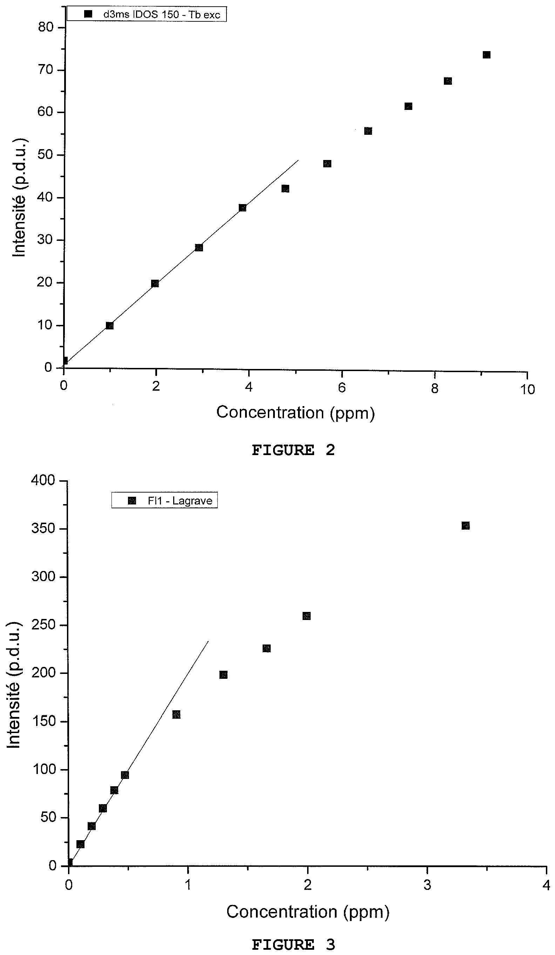

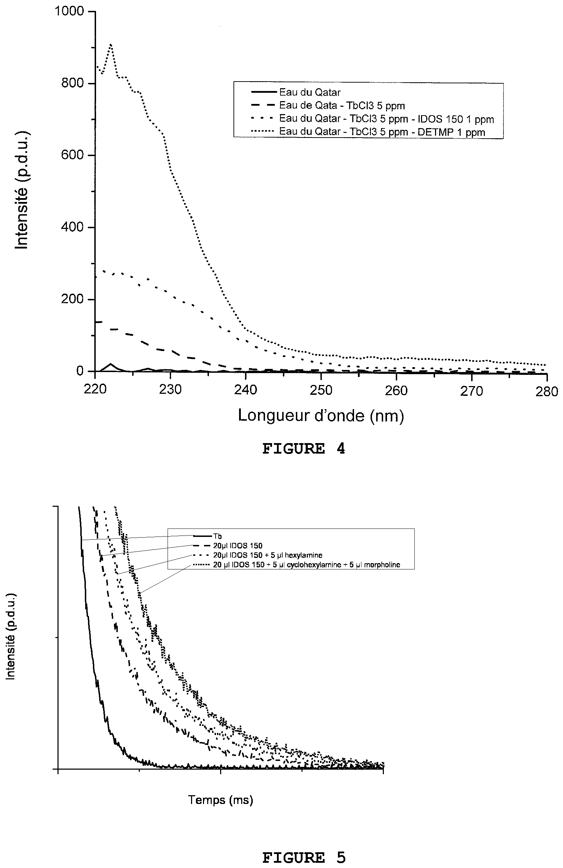

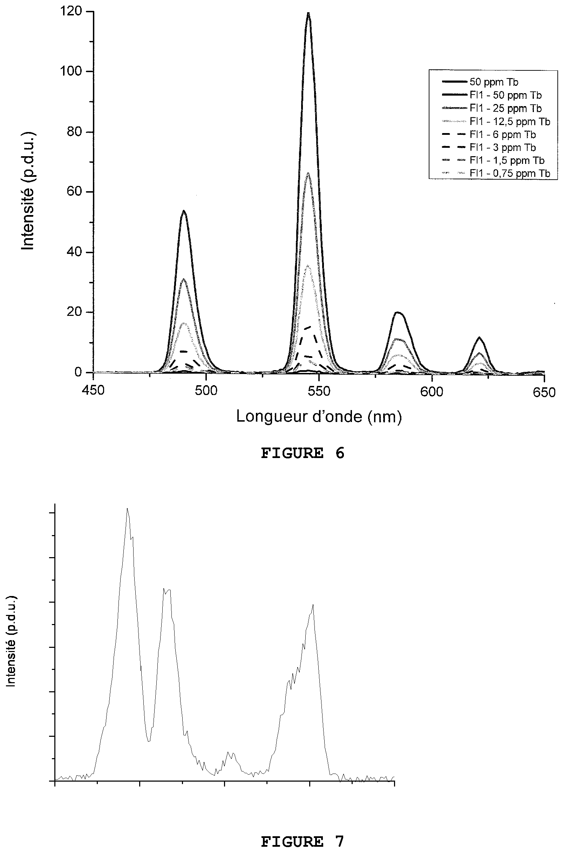

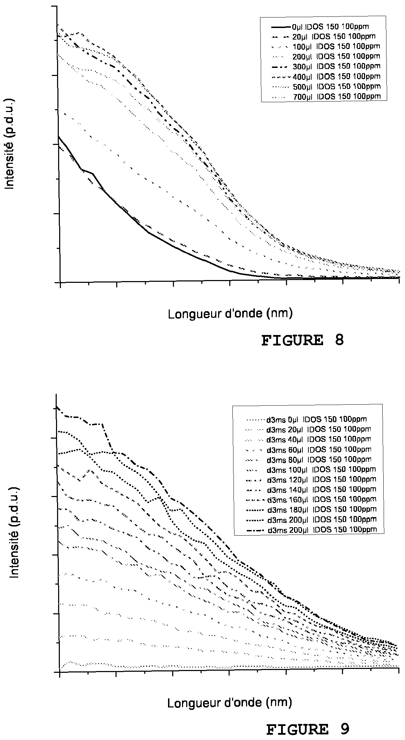

**La** **Figure 1** illustre le spectre d'excitation de mélanges Tb - DETMP
**La** **Figure 2** illustre la courbe de l'intensité de fluorescence en fonction de la concentration en PPCA sulfonaté
**La** **Figure 3** représente la courbe de l'intensité de la fluorescence en fonction de la concentration en inhibiteur Fl1
**La** **Figure 4** représente les spectres d'excitation de mélanges Tb - IDOS - DETMP dans de l'eau de production du Qatar
**La** **Figure 5** illustre les courbes de décroissance de mélanges Tb - PPCA sulfonaté - cyclohexylamine - morpholine
**La** **Figure 6** illustre les spectres d'émission de différentes concentrations d'inhibiteur Fl1 marqué DOTA-GA(Tb)
**La** **Figure 7** illustre le spectre d'émission d'un inhibiteur de type polyéthylèneimine greffée DOTA-GA(Eu)
**Les** **Figures 8 et 9** illustrent respectivement les spectres d'excitation de mélanges Tb - PPCA sulfonaté avec un délai d'intégration de 0,1 ms et 3 ms

La présente invention sera mieux comprise à la lumière des exemples non limitatifs suivants, qui sont donnés à titre purement illustratif et n'ont pas pour but de limiter la portée de cette invention qui est définie par les revendications annexées.

### EXEMPLES

### Exemple 1 - Détection du DETMP marqué par complexation

On prépare quatre solutions de concentrations variables entre 0 et 5 ppm en additionnant des volumes de 0 à 1000 µl de solution de DETMP (inhibiteur de la formation de sulfate et carbonate de calcium) à 10 ppm dans 2 mL d'eau de production du puits de Lagrave, France. On ajoute alors une quantité suffisante de TbCl₃ afin d'obtenir une concentration égale à 0,5 ppm. Les solutions sont mélangées et les mesures effectuées après 5 minutes.

Les mesures sont effectuées dans une cuvette en quartz à température ambiante sur un Cary Eclipse de la société Agilent (Lampe flash au Xénon de 75kW, Monochromateurs Czerny-Turner, Δₚᵤₗₛₑ = 2 µs, détecteur PM à 800V). Le délai est fixé à 0,1 ms et la durée de récolte de photon à 5 ms. La fréquence de la lampe est réglée à 100 Hz.

Des spectres d'excitation des différents échantillons sont réalisés entre 220 et 400 nm avec λₑₘ = 545 nm. Les spectres obtenus sont présentés à la Figure 1.

On observe sur la Figure 1 une modification des intensités et de la forme des pics sur les spectres d'excitation traduisant une complexation des ions terbium par le DETMP. Cet exemple montre qu'il est ainsi possible de détecter le DETMP entre 0,5 et 5 ppm.

### Exemple 2 - Détection d'un inhibiteur polymérique marqué par complexation

On prépare onze solutions de concentrations variables entre 0 et 10 ppm en additionnant des volumes de 0 à 1000 µl de solution de PPCA sulfonaté (IDOS 150 fourni par REP, qui est un inhibiteur de dépôts de baryum et de strontium) à 100 ppm dans 2 mL d'eau. On ajoute alors une quantité suffisante de TbCl₃ afin d'obtenir une concentration égale à 10 ppm. Les solutions sont mélangées et les mesures effectuées après 5 minutes.

Les mesures sont effectuées dans une cuvette en quartz à température ambiante sur un Cary Eclipse de la société Agilent (Lampe flash au Xénon de 75kW, Monochromateurs Czerny-Turner, Δₚᵤₗₛₑ = 2 µs, détecteur PM à 800V). Le délai est fixé à 3 ms et la durée de récolte de photon à 5 ms. La fréquence de la lampe est réglée à 100 Hz.

Des spectres d'excitation des différents échantillons sont réalisés entre 220 et 250 nm avec λₑₘ = 545 nm. Les intensités de pics à 225 nm sont présentées dans le Tableau 1 ci-dessous.

**Tableau 1**

| Concentration en PPCA sulfonaté (en ppm) | Intensité à 225 nm (émission à 545 nm) Délai : 3 ms (en p.d.u.) |
|---|---|
| 0.0 | 1.7 |
| 1.0 | 10.0 |
| 2.0 | 20.0 |
| 2.9 | 28.5 |
| 3.8 | 38.0 |
| 4.8 | 42.5 |
| 5.7 | 48.4 |
| 6.5 | 56.3 |
| 7.4 | 62.1 |
| 8.3 | 68.1 |
| 9.1 | 74.4 |

L'ensemble des points résultants est présenté à la Figure 2. Il ressort de cette Figure que l'intensité d'émission évolue clairement avec la quantité d'inhibiteur. Il est ainsi possible de déterminer aisément la quantité de PPCA sulfonaté jusqu'à une concentration inférieure à 10 ppm et avec une précision inférieure à 1 ppm.

### Exemple 3 - Détection d'un copolymère acide styrène sulfonique / acide maléique marqué par complexation

On prépare onze solutions de concentrations variables entre 0 et 5 ppm en additionnant des volumes de 0 à 1000 µl de solution de copolymère acide styrène sulfonique / acide maléique, ou FL1 (inhibiteur de dépôts de sulfures de zinc et de plomb) à 10 ppm dans 2 mL d'eau de production du puits de Lagrave, France. On ajoute alors une quantité suffisante de TbCl₃ afin d'obtenir une concentration égale à 10 ppm. Les solutions sont mélangées et les mesures effectuées après 5 minutes.

Les mesures sont effectuées dans une cuvette en quartz à température ambiante sur un Cary Eclipse de la société Agilent (Lampe flash au Xénon de 75kW, Monochromateurs Czerny-Turner, Δₚᵤₗₛₑ = 2 µs, détecteur PM à 800V). Le délai est fixé à 3 ms et la durée de récolte de photon à 5 ms. La fréquence de la lampe est réglée à 100 Hz.

Des spectres d'excitation des différents échantillons sont réalisés entre 220 et 250 nm avec λₑₘ = 545 nm. Les intensités de pics à 225 nm sont présentées dans le Tableau 2 ci-dessous.

**Tableau 2**

| Concentration en Fl1 (en ppm) | Intensité à 225 nm (émission à 545 nm) Délai : 3 ms (en p.d.u.) |
|---|---|
| 0.00 | 1.8 |
| 0.10 | 7.0 |
| 0.20 | 11.2 |
| 0.29 | 13.2 |
| 0.38 | 17.8 |
| 0.48 | 19.0 |
| 0.91 | 25.4 |
| 1.30 | 30.8 |
| 1.67 | 30.7 |
| 2.00 | 30.3 |
| 3.33 | 27.1 |

L'ensemble des points résultants est présenté à la Figure 3. Comme il ressort de cette Figure, l'intensité d'émission évolue clairement avec la quantité d'inhibiteur. Il est ainsi possible de déterminer aisément la quantité de Fl1 jusqu'à une concentration inférieure à 1 ppm et avec une précision inférieure à 0,1 ppm.

### Exemple 4 - Détection d'inhibiteurs de dépôts marqués par complexation dans l'eau du Qatar

On prépare quatre solutions contenant différents inhibiteurs de dépôts en additionnant des volumes de 0 à 20 µl de solution de DETMP ou de PPCA sulfonaté à 100 ppm dans à 2 mL d'eau de production d'un puits situé au Qatar. On ajoute alors une quantité suffisante de TbCl₃ afin d'obtenir une concentration égale à 5 ppm. Les solutions sont mélangées et les mesures effectuées après 5 minutes.

Les mesures sont effectuées dans une cuvette en quartz à température ambiante sur un Cary Eclipse de la société Agilent (Lampe flash au Xénon de 75kW, Monochromateurs Czerny-Turner, Δₚᵤₗₛₑ = 2 µs, détecteur PM à 800V). Le délai est fixé à 3 ms et la durée de récolte de photon à 5 ms. La fréquence de la lampe est réglée à 100 Hz.

Des spectres d'excitation des différents échantillons sont réalisés entre 220 et 280 nm avec λₑₘ = 545 nm. Les spectres obtenus sont présentés à la Figure 4. Comme il ressort de cette Figure, l'intensité de fluorescence est clairement modifiée par l'ajout de PPCA sulfonaté ou de DETMP. Il est donc possible de déterminer des concentrations de PPCA sulfonaté et de DETMP dans les eaux de production du Qatar à des concentrations inférieures à 1 ppm.

### Exemple 5 - Détection d'inhibiteurs de corrosion marqués par complexation

On prépare trois solutions contenant différents inhibiteurs de corrosion en additionnant des volumes de 0 à 20 µL de solution de cyclohexylamine ou morpholine à 100 ppm dans 2 mL d'eau. On ajoute alors une quantité suffisante de TbCl₃ afin d'obtenir une concentration égale à 5 ppm. Les solutions sont mélangées et les mesures effectuées après 5 minutes.

Les mesures sont effectuées dans une cuvette en quartz à température ambiante sur un Cary Eclipse de la société Agilent (Lampe flash au Xénon de 75kW, Monochromateurs Czerny-Turner, Δₚᵤₗₛₑ = 2 µs, détecteur PM à 800V). Le délai est fixé à 0,015 ms, la durée de récolte à 10ms, le pas à 0,01 ms. La fréquence de la lampe est réglée à 100 Hz.

Des spectres de durée de vie sont réalisés avec λ_{exc} = 270 nm et λₑₘ = 545 nm. Les courbes obtenues sont modélisées par des exponentielles décroissantes simples ou doubles. Les résultats sont regroupés dans le Tableau 3 ci-dessous.

**Tableau 3**

| **Solution** | **t₁** | **t₂** |
|---|---|---|
| 10 ppm Tb | 0,185 | - |
| 10 ppm Tb + 1 ppm cyclohexylamine | 0,112 | 0,286 |
| 10 ppm Tb + 1 ppm morpholine | 0,047 | 0,253 |

On observe ici l'apparition d'une deuxième vitesse de décroissance lors de l'ajout d'un inhibiteur de corrosion. Celle-ci permet leur discrimination vis-à-vis des ions terbium libre et donc leur détection.

### Exemple 6 - Détection d'un mélange d'inhibiteurs de dépôt et de corrosion marqués par complexation

On prépare quatre solutions contenant différents inhibiteurs de corrosion et de dépôt en additionnant des volumes de 0 à 20 µL de solution de cyclohexylamine, morpholine (inhibiteurs de corrosion) ou PPCA sulfonaté (inhibiteur de dépôts) à 100 ppm dans 2 mL d'eau. On ajoute alors une quantité suffisante de TbCl₃ afin d'obtenir une concentration égale à 5 ppm. Les solutions sont mélangées et les mesures effectuées après 5 minutes.

Les mesures sont effectuées dans une cuvette en quartz à température ambiante sur un Cary Eclipse de la société Agilent (Lampe flash au Xénon de 75kW, Monochromateurs Czerny-Turner, Δₚᵤₗₛₑ = 2 µs, détecteur PM à 800V). Le délai est fixé à 0,015 ms, la durée de récolte à 10ms, le pas à 0,01 ms. La fréquence de la lampe est réglée à 100 Hz.

Des spectres de durée de vie sont réalisés avec λ_{exc} = 270 nm et λₑₘ = 545 nm. L'ensemble des courbes obtenues est regroupé dans sur la Figure 5. Les courbes obtenues sont modélisées par des exponentielles décroissantes simples ou doubles, et les résultats sont regroupés dans le Tableau 4 ci-dessous.

**Tableau 4**

| Produit | t1 | t2 |
|---|---|---|
| TbCl₃ | 0,185 | - |
| TbCl3 + PPCA sulfonaté | 0,185 | 0,720 |
| TbCl₃ + PPCA sulfonaté + hexylamine | 0,185 | 0,747 |
| TbCl₃ + PPCA sulfonaté + hexylamine + morpholine | 0,185 | 0,776 |

On observe ici que la composante longue de la décroissance pour les trois mélanges d'inhibiteurs de dépôt et de corrosion est différente pour chacun des mélanges. Ceci permet de déterminer la durée de vie de chaque produit indépendamment et de séparer la contribution en intensité de chacune des fluorescences. Il est ainsi possible de connaître la concentration d'un mélange d'inhibiteurs avec une bonne précision.

### Exemple 7 - Détection d'un copolymère acide styrène sulfonique / acide maléique marqué par greffage-complexation

Dans un flacon de 10 mL, on place 5 mL de copolymère acide styrène sulfonique / acide maléique (inhibiteur de dépôts de sulfures de zinc et de plomb), ou Fl1, à 30% en masse. Le pH est alors ajusté à environ 6,3 par ajout d'environ 50 µl d'HCl 6M. Dans un second flacon de 15 mL, on place 5 mL de diethylèneglycol (DEG) ainsi que 40 mg de DOTA-GA anhydride (Société Chematech, France) et 18 µL de diethylenetriamine (DETA). Le pH de cette seconde solution est ajusté à environ 7,2 par ajout d'environ 30 µl d'HCl 6M. Les deux solutions sont placées sous agitation magnétique pendant 24h.

Après 24h on ajoute, dans le premier flacon contenant le Fl1, 101 mg d'1-éthyl-3-(3-dimethylaminopropyl) carbodiimide (EDC) et 170 mg de N-hydroxysuccinimide (NHS). Le pH est alors à nouveau ajusté à 6,3. Après 15 minutes, le contenu des deux flacons est mélangé. Le pH est ajusté à 7,2. Après 24h on ajoute 20 mg de TbCl₃.6H₂O (Société Nano-H, France) et la solution est placée dans une étuve à 80°C pendant 24h. Après refroidissement à température ambiante, la solution est purifiée sur système VIVASPIN® à 10 kDa.

On prépare 7 solutions contenant différentes concentrations d'inhibiteur marqué DOTA-GA(Tb) par addition de volumes de 0 à 1000 µL d'une solution d'inhibiteur à 100 ppm à des volumes d'eau de 1000 à 2000 µl, afin d'obtenir des concentrations en inhibiteur comprises entre 0 et 50 ppm et un volume total de 2 mL. Une solution contenant 50 ppm de TbCl₃ est également préparée pour référence.

Une solution de 2 mL d'eau contenant 1 ppm d'inhibiteur marqué DOTA-GA(Tb) est ensuite analysée.

Les mesures sont effectuées à température ambiante sur un Cary Eclipse de la société Agilent (Lampe flash au Xénon de 75kW, Monochromateurs Czerny-Turner, Δₚᵤₗₛₑ = 2 µs, détecteur PM à 800V). Le délai est fixé à 0,1 ms et la durée de récolte de photon à 5 ms. La fréquence de la lampe est réglée à 100 Hz.

Un ensemble de spectres d'émission est réalisé entre 450 et 650 nm avec λ_{exc} = 352 nm. Les courbes obtenues sont présentées à la Figure 6. On observe clairement sur cette Figure les pics d'émission caractéristiques du terbium à 485, 545, 575 et 620 nm. De plus, on observe clairement une augmentation de l'intensité en fonction de la quantité d'inhibiteur marqué présent en solution. Ceci permet d'affirmer qu'il est possible de détecteur cet inhibiteur marqué à une concentration inférieure à 0,75 ppm avec une bonne précision.

### Exemple 8 - Détection de polyéthylèneimine marquée par greffage-complexation

Dans un flacon de 100 mL, on place 4,6 mL de polyéthylèneimine (inhibiteur de dépôts de sulfures de zinc et de plomb) à 10% en masse. On ajoute 29,3 mg de DOTA-GA anhydride (Société Chematech, France) ainsi que une quantité suffisante d'eau distillée pour atteindre un volume total de 60 mL. La solution est agitée par agitation magnétique pendant 2h. On ajoute alors 30,0 mg d'EuCl₃.6H₂O (Société Nano-H, France) à la solution préparée. L'ensemble est placé dans une étuve à 80°C pendant 12h environ. Après refroidissement à température ambiante, la solution est purifiée sur système VIVASPIN® à 10 kDa avec un taux supérieur à 1000.

On prépare une solution de 2 mL d'inhibiteur greffé DOTA-GA(Eu) à 1 ppm.

Les mesures sont effectuées à température ambiante sur un Cary Eclipse de la société Agilent (Lampe flash au Xénon de 75kW, Monochromateurs Czerny-Turner, Δₚᵤₗₛₑ = 2 µs, détecteur PM à 800V). Le délai est fixé à 0,1 ms et la durée de récolte de photon à 5 ms. La fréquence de la lampe est réglée à 100 Hz.

On réalise un spectre d'émission de la solution préparée entre 550 et 750 nm avec λ_{exc} = 595 nm. La courbe obtenue est présentée sur la Figure 7.

On observe clairement sur cette Figure les pics caractéristiques de l'europium à 595, 615 et 700 nm. Cet essai montre qu'il est possible de marquer des inhibiteurs tels que la polyéthylèneimine par un complexe comme le DOTA-GA(Eu) et de les détecter à des concentrations inférieures à 1 ppm.

### Exemple 9 - Etude de la variation du délai d'intégration

On prépare quinze solutions de concentrations variables entre 0 et 10 ppm en additionnant des volumes de 0 à 1000 µl de solution de PPCA sulfonaté à 100 ppm dans 2 mL d'eau. On ajoute alors une quantité suffisante de TbCl₃ afin d'obtenir une concentration égale à 10 ppm. Les solutions sont mélangées et les mesures effectuées après 5 minutes.

Les mesures sont effectuées dans une cuvette en quartz à température ambiante sur un Cary Eclipse de la société Agilent (Lampe flash au Xénon de 75kW, Monochromateurs Czerny-Turner, Δₚᵤₗₛₑ = 2 µs, détecteur PM à 800V). La durée de récolte des photons est fixée à 5 ms. La fréquence de la lampe est réglée à 100 Hz.

Des spectres d'excitation des différents échantillons sont réalisés entre 220 et 250 nm avec λₑₘ = 545 nm avec un délai de 0,1 ms ou 3 ms. Les spectres obtenus sont présentés sur les Figures 8 et 9, respectivement. En comparant les Figures 8 et 9, on remarque que l'augmentation du délai de 0,1 ms à 3 ms permet de diminuer très fortement le bruit de fond (passage d'une intensité de 200 p.d.u. à environ 0), ce qui a pour effet d'augmenter très fortement le ratio signal/bruit et permet donc une détection beaucoup plus aisée des différents inhibiteurs analysés. Comme on peut aussi le remarquer, un délai plus long permet d'obtenir également une meilleure linéarité tout au long de l'analyse.

## Revendications

1. Méthode pour ajuster à une valeur prédéterminée le taux d'un inhibiteur de dépôts minéraux ou de corrosion injecté dans un puits de gaz ou de pétrole, comprenant les étapes successives suivantes :
- le marquage de l'inhibiteur à l'aide d'un lanthanide, ledit marquage étant effectué par greffage, sur le squelette de l'inhibiteur, d'une molécule complexant le lanthanide, pour les inhibiteurs de type polymériques, ou par complexation du lanthanide à l'aide de l'inhibiteur, pour les inhibiteurs de type chélates présentant une constante de complexation avec les ions lanthanides supérieure à 10,
- la détection et la quantification de l'inhibiteur marqué, par fluorescence en temps résolu, dans le fluide extrait du puits de production, et
- si nécessaire, l'injection dans le puits d'une quantité d'inhibiteur supplémentaire permettant d'atteindre ladite valeur prédéterminée,
ledit inhibiteur de dépôts minéraux étant choisi parmi :
- les polyphosphates,
- les organophosphonates,
- les polyacides carboxyliques,
- les polymères à fonction acide sulfonique, en particulier les copolymères d'acide styrène sulfonique et d'acide maléique,
- l'acide polyphosphinocarboxylique (PPCA) éventuellement sulfonaté,
- la polyéthylèneimine,
- les polymères siliconés fonctionnalisés par des groupements amines, et
- les copolymères à base d'ammonium quaternaire ;
et ledit inhibiteur de corrosion étant choisi parmi la cyclohexylamine, l'hexylamine, la morpholine, l'octadécylamine, le diéthylaminoéthanol et les bétaïnes.

2. Méthode selon la revendication 1, **caractérisée en ce que** le lanthanide est choisi parmi : Pr, Nd, Sm, Eu, Tb, Dy, Ho, Er, Tm et Yb, ainsi que leurs mélanges et/ou alliages, de préférence Tb et Eu.

3. Méthode selon l'une quelconque des revendications 1 à 2, **caractérisée en ce que** le délai d'intégration entre l'excitation de l'échantillon à analyser et la mesure du signal émis est compris entre 0,001 et 10 ms, de préférence entre 0,01 et 5 ms, plus préférentiellement entre 0,1 et 3 ms.

4. Utilisation de la méthode de fluorescence en temps résolu pour détecter et quantifier un inhibiteur de dépôts minéraux ou de corrosion, marqué par un lanthanide, dans un fluide issu d'un puits de production de pétrole ou de gaz, ledit marquage de l'inhibiteur étant effectué par greffage, sur le squelette de l'inhibiteur, d'une molécule complexant le lanthanide, pour les inhibiteurs de type polymériques, ou par complexation du lanthanide à l'aide de l'inhibiteur, pour les inhibiteurs de type chélates présentant une constante de complexation avec les ions lanthanides supérieure à 10,
ledit inhibiteur de dépôts minéraux étant choisi parmi :
- les polyphosphates,
- les organophosphonates,
- les polyacides carboxyliques,
- les polymères à fonction acide sulfonique, en particulier les copolymères d'acide styrène sulfonique et d'acide maléique,
- l'acide polyphosphinocarboxylique (PPCA) éventuellement sulfonaté,
- la polyéthylèneimine,
- les polymères siliconés fonctionnalisés par des groupements amines, et
- les copolymères à base d'ammonium quaternaire ;
et ledit inhibiteur de corrosion étant choisi parmi la cyclohexylamine, l'hexylamine, la morpholine, l'octadécylamine, le diéthylaminoéthanol et les bétaïnes.

## Patentansprüche

1. Verfahren zum Einstellen der Rate einer Mineralablagerung oder eines Korrosionsinhibitors, die in eine Gas- oder Ölbohrung eingespritzt wird, auf einen vorbestimmten Wert, umfassend die folgenden aufeinanderfolgenden Schritte:
- Markieren des Inhibitors mit einem Lanthanid, wobei die Markierung durch Pfropfen eines Lanthanid-Komplexiermoleküls für polymere Inhibitoren auf das Skelett des Inhibitors oder durch Komplexieren des Lanthanids mit dem Inhibitor für Chelat-Inhibitoren mit einer Komplexitätskonstante mit Lanthanidionen von mehr als 10 durchgeführt wird,
- Nachweis und Quantifizierung des markierten Inhibitors durch zeitaufgelöste Fluoreszenz in der aus dem Produktionsbehälter extrahierten Flüssigkeit und
- falls erforderlich, Einspritzen einer zusätzlichen Menge eines Inhibitors in die Bohrung, um den vorbestimmten Wert zu erreichen,
wobei der Mineralablagerungsinhibitor ausgewählt ist aus:
- Polyphosphate,
- Organophosphonate,
- Polycarbonsäuren,
- Polymere mit Sulfonsäurefunktion, insbesondere Copolymere aus Styrolsulfonsäure und Maleinsäure,
- Polyphosphinocarbonsäure (PPCA), eventuell sulfoniert,
- Polyethylenimin,
- Silikonpolymere, die mit Amingruppen funktionalisiert sind, und
- Copolymere auf Basis von quaternärem Ammonium;
und wobei der Korrosionsinhibitor ausgewählt ist aus Cyclohexylamin, Hexylamin, Morpholin, Octadecylamin, Diethylaminoethanol und Betain.

2. Verfahren nach Anspruch 1, **dadurch gekennzeichnet, dass** Lanthanid ausgewählt ist aus : Pr, Nd, Sm, Eu, Tb, Dy, Ho, Er, Tm und Yb, sowie deren Mischungen und/oder Legierungen, vorzugsweise Tb und Eu.

3. Verfahren nach einem der Ansprüche 1 bis 2, **dadurch gekennzeichnet, dass** die Integrationszeit zwischen der Anregung der zu analysierenden Probe und der Messung des Sendesignals zwischen 0,001 und 10 ms, vorzugsweise zwischen 0,01 und 5 ms, vorzugsweise zwischen 0,1 und 3 ms liegt.

4. Verwendung des zeitaufgelösten Fluoreszenzverfahrens zum Nachweis und zur Quantifizierung einer mit Lanthanid markierten Mineralablagerung oder eines Korrosionsinhibitors in einer Flüssigkeit aus einem Öl- oder Gasförderbohrloch, wobei die Markierung des Inhibitors durch Pfropfen durchgeführt wird, am Skelett des Inhibitors, eines lanthanidkomplexierenden Moleküls, für polymere Inhibitoren oder durch Komplexieren von Lanthanid mit dem Inhibitor, für chelatartige Inhibitoren mit einer Lanthanidionenkomplexkonstante größer als 10, wobei der Mineralablagerungsinhibitor ausgewählt ist aus:
- Polyphosphate,
- Organophosphonate,
- Polycarbonsäuren,
- Polymere mit Sulfonsäurefunktion, insbesondere Copolymere aus Styrolsulfonsäure und Maleinsäure,
- Polyphosphinocarbonsäure (PPCA), eventuell sulfoniert,
- Polyethylenimin,
- Silikonpolymere, die mit Amingruppen funktionalisiert sind, und
- Copolymere auf Basis von quaternärem Ammonium;
und wobei der Korrosionsinhibitor ausgewählt ist aus Cyclohexylamin, Hexylamin, Morpholin, Octadecylamin, Diethylaminoethanol und Betain.

## Claims

1. Method for adjusting to a predetermined value the level of a mineral deposition or corrosion inhibitor injected into a gas or oil well, comprising the following successive steps:
- the tagging of the inhibitor using a lanthanide, said tagging being carried out by grafting, on the skeleton of the inhibitor, a molecule complexing the lanthanide, for inhibitors of the polymeric type, or via complexation of the lanthanide using the inhibitor, for inhibitors of the chelate type which have a complexation constant with the lanthanide ions that is greater than 10,
- the detecting and the quantifying of the tagged inhibitor, via time-resolved fluorescence, in the fluid extracted from the production well, and
- if necessary, the injecting into the well of an additional quantity of inhibitor making it possible to reach said predetermined value,
said mineral deposition inhibitor being chosen from:
- polyphosphates,
- organophosphonates,
- carboxylic polyacides,
- polymers with a sulphonic acid function, in particular styrene sulphonic acid and maleic acid copolymers,
- optionally sulphonated polyphosphinocarboxylic acid (PPCA),
- polyethyleneimine,
- silicone polymers functionalised by amine groups, and
- copolymers made from quaternary ammonium,
and said corrosion inhibitor being chosen from cyclohexylamine, hexylamine, morpholine, octadecylamine, diethylaminoethanol and betaines.

2. Method according to claim 1, **characterised in that** the lanthanide is chosen from: Pr, Nd, Sm, Eu, Tb, Dy, Ho, Er, Tm and Yb, as well as mixtures and/or alloys thereof, more preferably Tb and Eu.

3. Method according to any of claims 1 to 2, **characterised in that** the integration delay between the excitation of the sample to be analysed and the measuring of the signal emitted is between 0.001 and 10 ms, preferably between 0.01 and 5 ms, more preferentially between 0.1 and 3 ms.

4. Use of the time-resolved fluorescence method for detecting and quantifying a mineral deposition or corrosion inhibitor, tagged by a lanthanide, in a fluid from an oil or gas production well, said tagging being carried out by grafting, on the skeleton of the inhibitor, a molecule complexing the lanthanide, for inhibitors of the polymeric type, or via complexation of the lanthanide using the inhibitor, for inhibitors of the chelate type which have a complexation constant with the lanthanide ions that is greater than 10,
said mineral deposition inhibitor being chosen from:
- polyphosphates,
- organophosphonates,
- carboxylic polyacides,
- polymers with a sulphonic acid function, in particular styrene sulphonic acid and maleic acid copolymers,
- optionally sulphonated polyphosphinocarboxylic acid (PPCA),
- polyethyleneimine,
- silicone polymers functionalised by amine groups, and
- copolymers made from quaternary ammonium,
and said corrosion inhibitor being chosen from cyclohexylamine, hexylamine, morpholine, octadecylamine, diethylaminoethanol and betaines.
